Europäisches Patentamt

European Patent Office

Office européen des brevets

(11) Numéro de publication: **0 162 490**
**B1**

(12) **FASCICULE DE BREVET EUROPEEN**

(45) Date de publication du fascicule du brevet: **04.07.90**

(51) Int. Cl.⁵: **C 01 D 3/22,** C 01 D 3/04, A 23 L 1/237

(21) Numéro de dépôt: **85200526.3**

(22) Date de dépôt: **04.04.85**

(54) Procédé pour la production de sel et sel obtenu par ce procédé.

(30) Priorité: **16.04.84 FR 8406097**

(43) Date de publication de la demande:
**27.11.85 Bulletin 85/48**

(45) Mention de la délivrance du brevet:
**04.07.90 Bulletin 90/27**

(84) Etats contractants désignés:
**AT BE CH DE FR GB IT LI LU NL SE**

(56) Documents cités:
**DE-A-1 492 998**

(73) Titulaire: **SOLVAY & Cie (Société Anonyme)**
**Rue du Prince Albert, 33**
**B-1050 Bruxelles (BE)**

(72) Inventeur: **Ninane, Léon**
**Rue Laennec, 1**
**F-54110 Dombasle-sur-Meurthe (FR)**
Inventeur: **Breton, Claude**
**Rue Pierre Breton, 5**
**F-54110 Dombasle-sur-Meurthe (FR)**

(74) Mandataire: **Anthoine, Paul**
**SOLVAY & Cie Département de la Propriété**
**Industrielle 310, rue de Ransbeek**
**B-1120 Bruxelles (BE)**

Courier Press, Leamington Spa, England.

EP 0 162 490 B1

## Description

La présente invention a pour objet un procédé pour la production de sel. Elle concerne plus particulièrement un procédé selon lequel on cristallise du chlorure de sodium par évaporation d'une saumure de chlorure de sodium.

Un procédé appliqué de longue date pour fabriquer du sel alimentaire consiste à chauffer une saumure de chlorure de sodium au-dessous de son point d'ébullition, dans des bassins ouverts ou poêles, de faible hauteur, présentant une grande surface d'évaporation ("Sodium Chloride", Kaufmann, Reinhold Publishing Corp., 1960, p. 262).

Le sel obtenu par ce procédé connu, habituellement dénommé "sell de poêle" se présente généralement à l'état de grains grossiers et irréguliers, d'aspect translucide, vitreux, dont l'utilisation est aisée et qui est, de ce fait, apprécié par certains consommateurs, par exemple pour les techniques de salaisons.

Ce procédé de fabrication de sel présente toutefois le désavantage d'être excessivement coûteux, le rendement du chauffage des saumures dans les poêles étant en effet très faible. Il présente le désavantage supplémentaire d'imposer des installations dont l'encombrement au sol est très important.

Pour remédier aux inconvénients précités de ce procédé connu, on a aussi proposé de traiter les saumures de chlorure de sodium dans des évaporateurs à étages multiples (dito, p. 205).

Comparée au procédé de fabrication du sel de poêle décrit plus haut, l'utilisation d'évaporateurs à étages multiples, travaillant généralement en dépression, permet un gain appréciable en combustible et elle s'accomode par ailleurs d'installations dont l'encombrement au sol est réduit.

Le sel obtenu par ce procédé connu a toutefois un aspect totalement différent du sel de poêle; il se présente habituellement à l'état de grains fins, d'apparence mate et opaque, dont les applications ne correspondent généralement pas à celles du sel de poêle.

L'invention vise à fournir un procédé qui permette la production, à bon compte, d'un sel présentant des propriétés comparables à celles du sel de poêle.

L'invention concerne à cet effet un procédé pour la production de sel, selon lequel on cristallise du chlorure de sodium à l'état de billes par évaporation d'une saumure de chlorure de sodium; selon l'invention, on cristallise des billes dont le diamètre est supérieur à 3 mm et on fragmente ensuite les billes à l'état de particules dont le diamètre moyen est compris entre 1 et 2,5 mm.

Dans la procédé selon l'invention, la cristallisation peut être opérée par tout moyen adéquat, capable de produire du sel à l'état de billes par évaporation d'une saumure. En pratique, il n'est pas souhaitable que le diamètre des billes dépasse 15 mm. Des diamètres qui conviennent particulièrement bien sont ceux compris entre 4 et 10 mm, et tout spécialement ceux au moins égaux à 5 mm.

Un moyen qui convient particulièrement bien pour cristalliser les billes de chlorure de sodium est celui décrit dans Chem. Ing. Techn. 52 (1980) Nr. 11, pages 872 et 873. Selon ce moyen, on évapore d'abord la saumure de chlorure de sodium de manière réglée pour la sursaturer en chlorure de sodium, puis on la fait circuler à travers un lit fluide de particules de chlorure de sodium.

La fragmentation des billes a pour objectif de produire des grains de sel ayant la granulométrie recherchée. Elle peut être opérée par tout moyen adéquat.

Selon une forme de réalisation préférée de l'invention, la fragmentation est réglée pour que la dimension des grains soit au maximum égale à 4 mm. En règle générale, il n'est pas souhaitable que le sel résultant de la fragmentation contienne une fraction importante de grains fins, dont la dimension est inférieure à 0,25 mm. En pratique, il est souhaitable que la fraction des grains dont la dimension est inférieure à 0,25 mm n'excède pas 2,5% du poids du sel.

Pour éviter une formation exagérée de fines particules de sel, il est avantageux, selon une forme de réalisation particulière de l'invention, d'exécuter la fragmentation des billes à l'état humide. Dans cette forme de réalisation de l'invention, il convient généralement de mettre en oeuvre une quantité d'eau au moins égale à 2 g, de préférence à 10 g, par kg de matière sèche. Il n'est pas souhaitable que la quantité d'eau mise en oeuvre dépasse 75 g par kg de matière sèche, les quantités inférieures à 50 g étant préférées. Les quantités d'eau comprises entre 5 et 20 g par kg de matière sèche conviennent généralement bien.

La température à laquelle la fragmentation est opérée, n'est pas critique. Elle peut habituellement être opérée à la température à laquelles les billes de chlorure de sodium sont produites, par exemple entre 50 et 90°C, dans le cas où l'évaporation de la saumure de chlorure de sodium est réalisée entre 90 et 110°C.

Le sel obtenu selon l'invention se présente à l'état de grains de dimensions variées sur une plage granulométrique étendue. Il trouve diverses applications, notamment dans le traitement des peaux, dans l'industrie alimentaire par exemple dans la confection des salaisons, et dans l'industrie culinaire.

Le sel obtenu selon l'invention est à l'état de grains dont la dimension est inférieure à 4 mm, présentant une distribution granulométrique définie par un diamètre moyen compris entre 1,00 et 2,50 mm et un écart type compris entre 0,50 et 1,50 mm, le diamètre moyen d et l'écart type σ étant définis par les relations suivantes (G. HERDAN, "Small particule statistics" 2e édition, 1960, Butterworths, pages 10 et 11):

2

EP 0 162 490 B1

$$d = \frac{\Sigma\ n_1 d_1}{\Sigma\ n_1} \quad \text{et} \quad \sigma = \sqrt{\frac{\Sigma\ n_1 (d_1 - d)^2}{\Sigma\ n_1}}$$

où $n_1$ désigne la fréquence (par exemple le poids) des particules de dimension $d_1$. Ce type de sel convient spécialement bien pour l'industrie alimentaire.

Le sel obtenu selon l'invention présente des propriétés physiques sensiblement identiques à celles du sel de poêle. Il présente une bonne coulabilité et une excellente aptitude aux techniques de salaison. Il a un aspect translucide et vitreux, comparable à celui du sel de poêle, et son utilisation pour la salage des aliments, est au moins aussi aisée que celle du sel de poêle.

Pour améliorer davantage la coulabilité du sel obtenu par le procédé selon l'invention et faciliter davantage son utilisation, on peut, en variante, y mélanger une substance antiagglutinate, communément utilisée dans la production de sel alimentaire (Gmelins Handbuch der anorganischen Chemie, 8. Auflage, Natrium, Lief. 1, N° 21, 1964, p. 144 à 146). Une substance antiagglutinante préférée, est le ferrocyanure de potassium.

Des particularités de l'invention ressortiront de la description suivante d'une forme de réalisation du procédé selon l'invention.

On a cristallisé des billes de chlorure de sodium d'environ 5 mm de diamètre par évaporation d'une saumure de chlorure de sodium au moyen de la technique en lit fluide décrite dans Chem.-Ing.-Techn. 52 (1980) Nr. 11, pages 872 et 873. On a soutiré de la base du lit fluide une suspension de billes dans une saumure saturée à environ 100°C. La suspension qui contenait 500 g de billes par kg a été essorée sur une toile de manière que les billes recueillies contiennent un taux d'humidité d'environ 9,7 g $H_2O$/kg.

Un kg de billes humides ainsi obtenues ont été broyées par passage entre une paire de cylindres lisses de 200 mm de diamètre, de 200 mm de longueur tournant à la vitesse de 374 tours par minute. L'écartement des cylindres a été fixé à 2,5 mm. Le sel recueilli à l'issue du broyage était conforme à l'invention et présentait la distribution granulométrique cumulative suivante:

| Ouverture du tamis (diamètre des mailles en mm) | Passé (% poids) |
|---|---|
| 0,25 | 5 |
| 0,50 | 11 |
| 0,71 | 15 |
| 1,0 | 21 |
| 2,0 | 57 |
| 4,0 | 100 |

Cette distribution granulométrique se caractérise par un diamètre moyen de 1,93 mm et un écart type de 1 mm.

**Revendications**

1. Procédé pour la production de sel, selon lequel on cristallise du chlorure de sodium à l'état de billes par évaporation d'une saumure de chlorure de sodium, caractérisé en ce qu'on cristallise des billes dont le diamètre est supérieur à 3 mm et on fragmente les billes à l'état de particules dont le diamètre moyen est compris entre 1 et 2,5 mm.

2. Procédé selon la revendication 1, caractérisé en ce qu'on cristallise le chlorure de sodium à l'état de billes dont le diamètre est au moins égal à 5 mm et on règle la fragmentation pour que la dimension des grains de sel résultant de celle-ci soit au maximum égale à 4 mm.

3. Procédé selon la revendication 1 ou 2, caractérisé en ce qu'on exécute l'évaporation à une température comprise entre 90 et 110°C et la fragmentation à une température comprise entre 50 et 90°C.

4. Procédé selon l'une quelconque des revendications 1 à 3, caractérisé en ce que, pour cristalliser le chlorure de sodium, on évapore d'abord la saumure de chlorure de sodium de manière réglée pour la sursaturer en chlorure de sodium, puis on la fait circuler à travers un lit fluide de particules de chlorure de sodium.

3

5. Procédé selon l'une quelconque des revendications 1 à 4, caractérisé en ce qu'on fragmente les billes à l'état humide.

6. Procédé selon la revendication 5, caractérisé en ce qu'on règle le degré d'humidité des billes soumises à la fragmentation, pour qu'elles contiennent entre 5 et 20 g d'eau par kg de matière sèche.

**Patentansprüche**

1. Verfahren zur Herstellung von Salz gemäß dem man Natriumchlorid in kugelförmigen Zustand durch Verdampfen einer Natriumchlorid-Salzlösung kristallisiert, dadurch gekennzeichnet, daß man Kugeln, deren Durchmesser größer als 3 mm ist, kristallisiert und die Kugeln in teilchenförmigen Zustand, deren mittlerer Durchmesser zwischen 1 und 2,5 mm beträgt, zerkleinert.

2. Verfahren nach Anspruch 1, dadurch gekennzeichnet, daß man das Natriumchlorid in kugelförmigem Zustand, deren Durchmesser wenigstens gleich 5 mm beträgt, kristallisiert und man die Zerkleinerung reguliert, damit die Abmessung der daraus resultierenden Salzkörner maximal gleich 4 mm ist.

3. Verfahren nach Anspruch 1 oder 2, dadurch gekennzeichnet, daß man die Verdampfung bei einer Temperatur zwischen 90 und 110°C und die Zerkleinerung bei einer Temperatur zwischen 50 und 90°C durchführt.

4. Verfahren nach einem der Ansprüche 1 bis 3, dadurch gekennzeichnet, daß man zur Kristallisation des Natriumchlorids zuerst die Natriumchlorid-Salzlösung reguliert verdampft, um sie mit Natriumchlorid zu übersättigen und man sie dann durch ein Wirbelbett aus Natriumchloridteilchen zirkulieren läßt.

5. Verfahren nach einem der Ansprüche 1 bis 4, dadurch gekennzeichnet, daß man die Kugeln in feuchtem Zustand zerkleinert.

6. Verfahren nach Anspruch 5, dadurch gekennzeichnet, daß man den Feuchtigkeitsgrad der der Zerkleinerung unterworfenen Kugeln reguliert, damit sie zwischen 5 und 20 g Wasser pro kg trockenem Material enthalten.

**Claims**

1. Process for the production of salt, according to which sodium chloride is crystallized in the form of spheres by evaporation of a sodium chloride brine, characterized in that spheres are crystallized with a diameter greater than 3 mm and the spheres are broken up in the form of particules whose mean diameter is between 1 and 2.5 mm.

2. Process according to Claim 1, characterized in that sodium chloride is crystallized in the form of spheres with a diameter of at least 5 mm and the breaking up is controlled so as to make the size of the salt particles produced thereby equal to at most 4 mm.

3. Process according to Claim 1 or 2, characterized in that the evaporation is carried out at a temperature of between 90 and 110°C and the breaking up at a temperature of between 50 and 90°C.

4. Process according to any one of Claims 1 to 3, characterized in that, to crystallize the sodium chloride, the sodium chloride brine is first evaporated in a controlled manner to supersaturate it with sodium chloride and it is then circulated through a fluid bed of sodium chloride particles.

5. Process according to any one of Claims 1 to 4, characterized in that the spheres are broken up in a moist state.

6. Process according to Claim 5, characterized in that the moisture content of the spheres subjected to the breaking up is controlled so that they contain between 5 and 20 g of water per kg of dry solids.